# EUROPÄISCHE PATENTSCHRIFT

(11) **EP 1 875 965 B1**
(45) Veröffentlichungstag und Bekanntmachung des Hinweises auf die Patenterteilung: **27.02.2013**
(21) Anmeldenummer: 07110689.2
(22) Anmeldetag: 20.06.2007
(51) Int. Cl.: B01J 47/00, B01J 47/04, B01J 41/12

(54) **Verfahren zur Herstellung von nicht agglomerierenden Ionenaustauscher-Mischbetten**
Process for the production of non-agglomerating ion exchange mixed beds
Procédè de fabrication de lits mixtes d' échangeurs d'ions non agglomérants

(30) Priorität: 08.07.2006 DE 102006031671
(43) Veröffentlichungstag der Anmeldung: 09.01.2008
(73) Patentinhaber: LANXESS Deutschland GmbH, 51369 Leverkusen (DE)
(72) Erfinder: Zarges, Wolfgang, 51069, Köln (DE); Hilger, Stefan, 53819, Neunkirchen-Seelscheid (DE); Vanhoorne, Pierre, 40789, Monheim (DE); Wedemeyer, Hans-Jürgen, 51371, Leverkusen (DE)

(56) Entgegenhaltungen:
- EP-A1- 1 220 874
- FR-A- 1 184 632
- US-A- 5 532 279
- US-A- 5 902 833

## Beschreibung

Die Erfindung betrifft ein Verfahren zur Herstellung von nicht agglomerierenden Ionenaustauscher-Mischbetten oder von Mischbettkomponenten.

Die Verwendung von Ionenaustauscher-Mischbetten in der Entsalzung von wässrigen Lösungen ist Stand der Technik. Oberflächen-Wechselwirkungen zwischen den kationischen und anionischen Bestandteilen der Mischung führen zur Bildung von Agglomeraten ("Clumping") und damit zu schlechtem Fließverhalten. Darüber hinaus ist die Leistungsfähigkeit solcher Mischbetten unzureichend. Weiterhin behindert die Agglomeration die effektive Regeneration der Ionenaustauscherharze, zu der die Mischung möglichst vollständig in ihre Bestandteile zerlegt werden muss.

Um das unerwünschte "Clumping" in Mischbetten zu verhindern, wurden diverse Methoden beschrieben wie beispielsweise a) die Behandlung mit wasserunlöslichen lonenaustauscherpartikeln in US-A 4 347 328 wo hohe Einsatzmengen und hohe Waschwasservolumina erforderlich sind, um überschüssige lonenaustauscherpartikel wieder zu entfernen oder aber b) die Behandlung mit wasserlöslichen, harzförmigen Polyelektrolyten gemäß US-A 2 961 417, US-A 3 168 486, US-A 5 902 833, US-A 6 060 526 oder EP-A 1 291 083. Bei den wasserlöslichen Polyelektrolyten zur Behandlung der Anionenaustauscherkomponente handelt es sich um "water-soluble resinous polyelectrolytes" wie polymere Acryl- oder Methacrylsäure(derivate), vorzugsweise aber um sulfonierte Polyvinylaromaten und ganz besonders bevorzugt um Polystyrolsulfonsäure (PSS). Abhängig vom mittleren Molgewicht der PSS kann man nach diversen Kriterien optimale Einsatzmengen ermitteln. Für mittlere Molgewichte von 5.000 bis 1.000.000 g/mol liegen die bevorzugten Einsatzmengen im Bereich von 10 bis 800 mg/Liter Anionenaustauscher.

Eine gute Trennbarkeit der Mischbetten wird aber nur bei gleichzeitiger Behandlung der Kationenaustauscherkomponente erzielt wie sie beispielsweise in EP-A 1 291 083 beschrieben wird. Auch hierbei kommen wasserlösliche Polyelektrolyte zum Einsatz, beispielsweise polyvinylaromatische quaternäre Ammoniumsalze, polyvinylaromatische Aminosäuresalze und Polyvinylpyridiniumsalze mit mittleren Molgewichten von 5.000 bis 1.000.000 g/mol.

Die vorliegenden Verfahren haben allesamt den Nachteil, dass die polyvinylaromatischen Säuren bzw. Ammoniumverbindungen in dem geeigneten Molmassenbereich nur relativ schwer zugänglich sind, und dass zur Erzielung einer guten Trennbarkeit im Mischbett beide Einsatzkomponenten behandelt werden müssen.

Aufgabe der vorliegenden Erfindung war die Überwindung der beschriebenen Nachteile.

Lösung der Aufgabe und somit Gegenstand der vorliegenden Erfindung ist ein Verfahren zur Herstellung von Ionenaustauschermischbetten oder von Mischbettkomponenten gemäß den Ansprüchen 1 bis 5.

Überraschenderweise erhält man durch die erfindungsgemäß ausschließliche Behandlung der Anionenaustauscherkomponente ein nicht agglomerierendes, gut trennbares Mischbett mit hervorragenden Entsalzungsleistungen.

Das erfindungsgemäße Verfahren sieht allein die Behandlung der Anionenaustauscherkomponente mit oligomeren, aromatischen Sulfonsäurekondensaten vor, wie sie zum Beispiel als Gerbstoffe und Verflüssiger zum Einsatz kommen. Diese Sulfonsäurekondensate sind bereits aus EP-A 0 037 250 oder DE-A 2 934 980 bekannt. Unter aromatischen Sulfonsäuren werden im Rahmen dieser Erfindung auch sulfomethylierte Aromaten verstanden. Sulfonierte Aromaten sind: Die Kondensation der Sulfonsäuren erfolgt dabei mit Aldehyden oder Ketonen. Hier kommen insbesondere aliphatische, cycloaliphatische sowie aromatische Vertreter in Frage. Bevorzugt sind aliphatische Aldehyde, wobei besonders bevorzugt Formaldehyd sowie andere aliphatische Aldehyde mit 3-5 C-Atomen verwendet werden.

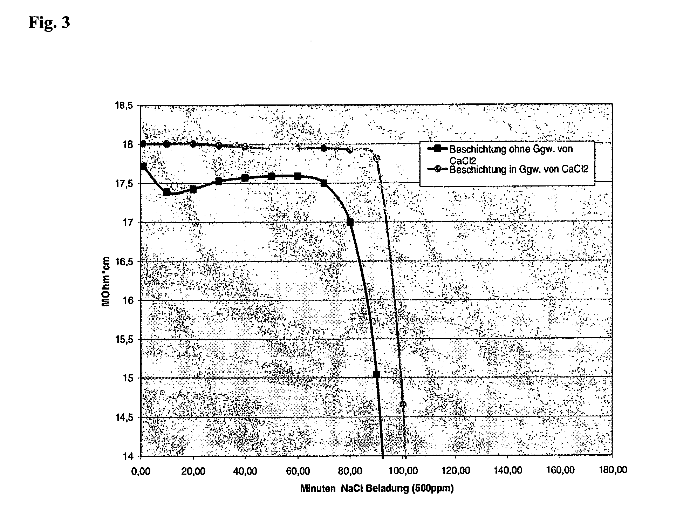

Diese Kondensate liegen im Allgemeinen in Form ihre Alkali-, Erdalkali- oder Ammoniumsalze vor und werden von "Neutralsalzen" aus synthesebedingten Neutralisationsreaktionen begleitet. Der Einsatz dieser Kondensate kann, muss aber nicht, in Form ihrer salzarmen Formulierungen, deren Herstellung z. B in EP-A 0 816 406 beschrieben ist, erfolgen. Ganz im Gegenteil kann durch Salzzusätze offenbar das Aufziehverhalten der Kondensate verbessert werden, was sich in messbar verbesserter Entsalzungsleistung zeigt (Beispiel 5, Fig. 3). In einer bevorzugten Ausführungsform gibt man deshalb der Anionenaustauscherkomponente Salz hinzu, besonders bevorzugt Erdalkalisalze. Insbesondere bevorzugt wird Calciumchlorid zugesetzt.

Ionenaustauscherharze, wie sie in dieser Erfindung beschrieben werden, sind typischerweise kugelförmige Polymerperlen mit einem Durchmesser von 0,15-1,20 mm, bevorzugt mit einem Durchmesser von 0,25-1,00 mm.

Von besonderem Interesse sind hier stark saure Kationenaustauscher und stark basische Anionenaustauscher auf Basis von Monovinyl-Aromaten bevorzugt Styrol oder alkylsubstituierten Ablegern, die mit vernetzungsfähigen Monomeren copolymerisiert werden. Als Vernetzer in diesem Sinne werden bevorzugt Divinylbenzol (oder alkylsubstituierte Verwandte), Octadien, Trivinylcyclohexan und ethylenglykolverbrückte Divinylether bzw. Divinylacrylate und Divinylmethacrylate eingesetzt.

Besonders bevorzugt sind stark saure Kationenaustauscher, die durch Sulfonierung aus den zuvor genannten Polymeren erhalten werden und stark basische Anionenaustauscher mit quaternären Ammoniumgruppen, die durch Aminomethylierung (Chlormethylierungsverfahren oder Phthalimidverfahren) aus den o. g. Polymeren synthetisiert wurden. Dabei ist es ohne jede Bedeutung, ob die genannten Ionenaustauscherharze als so genannte gelförmige oder makroporöse (Polymerisation der o. g. Einsatzmaterialien in Gegenwart eines inerten Lösungs/Fällungsmittels) Spezies vorliegen. Weiterhin ist die Wirkung unabhängig von der Salzform der zu behandelnden Anionenaustauscherkomponente (z. B. Chlorid, Sulfat, Hydroxid). Bevorzugt nach dem erfindungsgemäßen Verfahren zu behandelnde Ionenaustauscher sind:
- stark saure gelförmige Kationenaustauscher beispielsweise LEWATIT^{®} MonoPlus S 200
- stark saurer makroporöser Kationenaustauscher beispielsweise LEWATIT^{®} MonoPlus SP 112
- stark basischer gelförmiger Anionenaustauscher beispielsweise LEWATIT^{®} MonoPlus M 500
- stark basischer makroporöser Anionenaustauscher beispielsweise LEWATIT^{®} MonoPlus MP 500

Für das erfindungsgemäße Verfahren besonders bevorzugte Vertreter der genannten Sulfonsäurekondensate sind:
RETINGAN^{®} ZN, TAMOL^{®} NN4501, TAMOL^{®} NH7519 - methylenkondensierte Naphthalinsulfonsäure(n) [NSSK=Naphthalinsulfonsäurekondensate bzw. NSS = methylenkondensierte Naphthalinsulfonsäure]
BAYKANOL^{®} SL - methylenkondensierte sulfonierte Ditolylether
TANIGAN^{®} BN - methylenkondensierte Naphthalinsufonsäure(n) und 4,4'-Dihydroxydiphenylsulfon.

Erfindungsgemäß bevorzugt erfolgt die Aufbringung der polyanionischen Komponente im batch auf den Anionenaustauscher.
Erfindungsgemäß bevorzugt erfolgt bei der Herstellung von Mischbetten die Behandlung des Anionenaustauschers vor der Regeneration des Anionenaustauschers und vor der Mischung mit der Kationenaustauscherkomponente. Alternativ ist aber auch eine nachträgliche Behandlung ebenfalls möglich.

Erfindungsgemäß ganz besonders bevorzugt werden als Sulfonsäurekondensate methylenverbrückte Naphthalinsulfonsäuren [NSSK] eingesetzt. Insbesondere besonders bevorzugt weisen die Sulfonsäurekonensate ein Molgewicht von > 1.000 g/mol, bevorzugt > 5.000 g/mol und ganz besonders bevorzugt > 20.000 g/mol auf.

### Beispiele

### Beispiel 1

Das zu behandelnde Anionenaustauscherharz (LEWATIT^{®} MonoPlus M 500) wird im Becherglas mit der angegebenen Menge Kondensat als 0,1%ige Lösung beaufschlagt. Man rührt für 20 min und lässt dann weitere 10 min stehen. Danach wird entwässert und mit 2 BV (Bettvolumen) entionisiertem Wasser gewaschen.

50 ml des so behandelten Anionenaustauscherharzes werden unter Wasser auf einem Vibrationstisch bis zur Volumenkonstanz eingerüttelt und mit dem gleichen Volumen (eingerüttelt unter Wasser) eines stark sauren Kationenaustauschers (LEWATIT^{®} MonoPlus S 200) in einem Becherglas durch Rühren gemischt. Abschließend wird die Mischung unter Wasser auf dem Vibrationstisch eingerüttelt. Das Volumen der Mischung wird bestimmt. Ergebnisse mit unterschiedlichen Kondensaten in unterschiedlichen Anwendungsmengen sind Tabelle 1 zu entnehmen.

### Beispiel 2

Das zu behandelnde Anionenaustauscherharz (LEWATIT^{®} MonoPlus M 500) wird im Becherglas unter Rühren mit 1,5 g/(Liter Harz) des NSS-Kondensates 2, gelöst in vollentsalztem Wasser (VE-Wasser), versetzt. Man lässt dann 10 min stehen. Danach wird entwässert und mit 2 BV deionisiertem Wasser gewaschen. Die Regeneration erfolgt durch Behandlung mit 300 g NaOH 100% / 1 Harz als 5%ige Lösung im Durchlauf.

250 ml des so behandelten Anionenaustauscherharzes werden unter Wasser auf einem Vibrationstisch bis zur Volumenkonstanz eingerüttelt und mit 160 ml (eingerüttelt unter Wasser) eines stark sauren Kationenaustauschers (LEWATIT^{®} MonoPlus S 200) in einem Becherglas durch Rühren gemischt. Abschließend wird die Mischung in eine Austauschersäule überführt und mit 10 BV Trinkwasser beaufschlagt.

Durch im Kolonnenboden einströmendes Wasser wird das Bett dann zur Regeneration auf etwa die dreifache Höhe gestreckt. Nach ca. 2 min reduziert man den Strom des einströmenden Wassers kontinuierlich bis auf den Wert Null. Danach wird vorsichtig bis kurz über das Ionenaustauscherbett entwässert. Man erkennt den Anionenaustauscher oben und den Kationenaustauscher unten. Die Volumenanteile beider Fraktionen werden bestimmt. Sehr gute Separation ergibt einen Anionenaustauscheranteil von 61 %.

NSSK Zusätze (1 g/l Anionenaustauscherkomponente) werden in die dem Mischbett überstehende Flüssigkeit eingebracht. Der Flüssigkeitsstand wird dann weiter bis auf Bettniveau abgesenkt. Nach 10 min beginnt man mit der Bettstreckung durch von unten einströmendes Wasser.

### Beispiel 3

Das zu behandelnde Anionenaustauscherharz (LEWATIT^{®} MonoPlus MP 500) wird im Becherglas mit 1,5 g/(Liter Harz) Naphthalinsulfonsäurekondensat 1 als 0,1%ige Lösung bzw. mit 1,25 g/(Liter Harz) sulfoniertem Polystyrol (Versa^{®} TL 130) beaufschlagt. Man rührt für 20 min und lässt dann weitere 10 min stehen. Danach wird entwässert und mit 10 BV entionisiertem Wasser gewaschen.

### Beispiel 4

### Testaufbau:

| | |
|---|---|
| Testvolumen | ca. 400 ml |
| | 270 g |
| Durchflussmenge: | 28,5 BV |
| | 11,4 1/h |

### Vorbehandlung der Proben aus Beispiel 3:

Regeneration mit 300 g/l HCl/NaOH 100%, wenn nicht regenerierte Harzmischungen getestet werden. [KR/OH-Regeneration: NaOH - H₂SO₄ - NaHCO₃ - N_{A}OH → Regenerationsgrad > 90%]

Im Falle von Fertigmischungen sind die Harze vor Versuchsbeginn gründlich zu mischen.

Vor Testbeginn wird die Probe mit 10 BV ausgewaschen.

### Messgeräte:

| | |
|---|---|
| Anatel^{®} 1000 | für Totalkapazität |
| Thornton^{®} 770 PC | für Widerstand |

### Testschritte:

1. Waschen bis der max. Widerstandswert in Ablauf erreicht ist (approx. 1 h)
2. Beladen mit Rohwasser bis zum Durchbruch (<1 MΩ)

### Waschwasserqualität:

| | |
|---|---|
| Widerstand: | >18,2 MΩ |
| TOC: | 1-3 ppb |

### Beladungswasserqualität:

| | |
|---|---|
| Leitfähigkeit: | 450-500 µS/cm |
| Salzgehalt: | 5-6 meq/l |
| SiO₂-Gehalt: | 3-4 ppm |

Die Reduktion der Agglomeration ist mit einer konventionellen Methode messbar, wie sie in Beispiel 1 beschrieben ist. Ein befriedigender Grad der "Nicht-Agglomeration" ist erreicht, wenn die kombinierten (eingerüttelten) Volumina von Anionen- und Kationenaustauscher nach Mischung nicht mehr als 20 %, bevorzugt nicht mehr als 10 % und besonders bevorzugt nicht mehr als 5 % über dem Gesamtvolumen der getrennten Harze liegen.

Ergebnisse gemäß Beispiel 1 sind in Tabelle 1 zusammengestellt.

### Beispiel 5

Je 600 ml Anionenaustauscher werden mit 600 ml Lösung (a: VE-Wasser, b: 1 %ige CaCl₂-Lösung in VE-Wasser) in einer Glassäule vermischt und durch von unten einströmende Luft verwirbelt. Unter Wirbeln werden im Laufe von 45 min 0,72 g einer 5 %igen Lösung des Naphthalinsulfonsäurekondensates 2 in VE-Wasser zugesetzt (entspricht 60 mg NSSK2 je Liter Anionenaustauscher). Nach beendeter Zugabe wird noch 15 min weiter verwirbelt. Danach lässt man die Lösung abtropfen und füllt mit VE-Wasser bis 1 cm über Harzoberfläche auf, bevor mit 2400 g Schwefelsäure (3 %ig) umgeladen wird. Es schließt sich eine Neutralwäsche an. Danach erfolgt die Umladung in die OH-Form mit 2395 g einer 10 %igen Natronlaugelösung. Abschließend wird neutral gewaschen und zur Messung mit LEWATIT^{®} MonoPlus S 200 KR vermischt (Fig. 3).

**Tabelle 1: Mischbett-Agglomerations-Test gemäß Beispiel 1. Mischung von LEWATIT^{®} MonoPlus M500 und LEWATIT^{®} MonoPlus S 200. Angegeben ist die Einsatzmenge der Kondensate. Das in den kommerziellen Produkten. enthaltene anorganische Salz wurde nicht berücksichtigt.**

| **Additiv-Name und Anwendungsmenge** | | **Volumen eingerüttelt** |
|---|---|---|
| **"Nullversuch"** | | 167 ml |
| **Naphthalinsulfonsäurekondensat 1** | | |
| | 0,50 g/Liter Harz | 102 ml |
| | 0,10 g/Liter Harz | 101 ml |
| | 0,05 g/Liter Harz | 145 ml |
| **Naphthalinsulfonsäurekondensat 2** | | |
| | 0,10 g/Liter Harz | 102 ml |
| | 0,05 g/Liter Harz | 102 ml |
| **Sulfonierter Ditolylether sulfoniert, kondensiert** | | |
| | 0,50 g/Liter Harz | 101 ml |
| | 0,10 g/Liter Harz | 103 ml |
| | 0,05 g/Liter Harz | 152 ml |
| **Naphthalinsulfonsäure und 4,4'-Dihydroxydiphenylsulfon cokondensiert** | | |
| | 0,50 g/Liter Harz | 101 ml |
| | 0,10 g/Liter Harz | 140 ml |

Zur Regeneration müssen die Mischbetten zuerst in die Einzelkomponenten zerlegt werden. Dies geschieht im Allgemeinen dadurch, dass man Wasser von unten in die Austauschersäulen injiziert. Im Wasserstrom ordnen sich die Komponenten entsprechend ihrer Dichte: Der Anionenaustauscher befindet sich oberhalb des Kationenaustauschers. Die Trennschicht ist aufgrund der Farbunterschiede der Komponenten gut zu identifizieren. Voraussetzung für eine möglichst vollständige Regeneration des Mischbettes (d.h. seiner Einzelkomponenten) ist eine gute Auftrennung in Anionenaustauscher- und Kationenaustauscherkomponenten. Diese Auftrennung ist aber bei unbehandelten Einsatzstoffen fast nicht und bei zuvor behandelten Anionenaustauscherkomponente nur unzureichend gegeben. Setzt man nun vor der Trennung eine geringe Menge der erfindungsgemäßen Verbindungen zu, mischt wie üblich durch Injektion von Luft oder Stickstoff, so lässt sich anschließend das Mischbett im Wasser-Aufstrom nahezu perfekt in die Einzelkomponenten zerlegen (Beispiel 2).

Um die Trennbarkeit des Mischbettes zu überprüfen, wurde eine Methode angewendet, bei der die Herstellung eines Ionenaustauschermischbettes, seine Nutzung zur Gewinnung von ultrareinem Wasser und die nachfolgende Trennung des Mischbettes in seine Bestandteile im Aufstromverfahren simuliert wird (Beispiel 2). Dabei werden 61 Teile eines stark basischen Anionenaustauschers mit 39 Teilen eines stark sauren Kationenaustauschers gemischt, in eine Kolonne überführt und anschließend im Entsalzungsbetrieb zur Herstellung hochreinem Wasser betrieben. Nach einer gewissen Laufzeit werden die Komponenten im Wasser-Aufstrom voneinander getrennt. Man lässt absetzen, entwässert und bestimmt die optisch erkennbare prozentuale Zusammensetzung des Gemisches. Perfekte Separation ergibt einen Anionenaustauscheranteil von 61 %. Die Ergebnisse sind Tabelle 2 zu entnehmen.

**Tabelle 2: Ergebnisse des Mischbett-Separationstests gemäß Beispiel 2**

| **lfd. Nr.** | **Kationenaustauscher** | **Anionenaustauscher** | **Additiv vor Trennung** | **Vol. des Anionenaustauschers nach Separation** |
|---|---|---|---|---|
| 1 | unbehandelt | unbehandelt | Nein | Keine Trennung |
| 2 | unbehandelt | unbehandelt | NSS-Kondensat 2 | 61 % |
| 3 | unbehandelt | NSS-Kondensat 2 | Nein | 25 % |
| 4 | unbehandelt | NSS-Kondensat 2 | NSS-Kondensat 2 | 60 % |

### Auswirkung der Behandlung auf Mischbettperformance

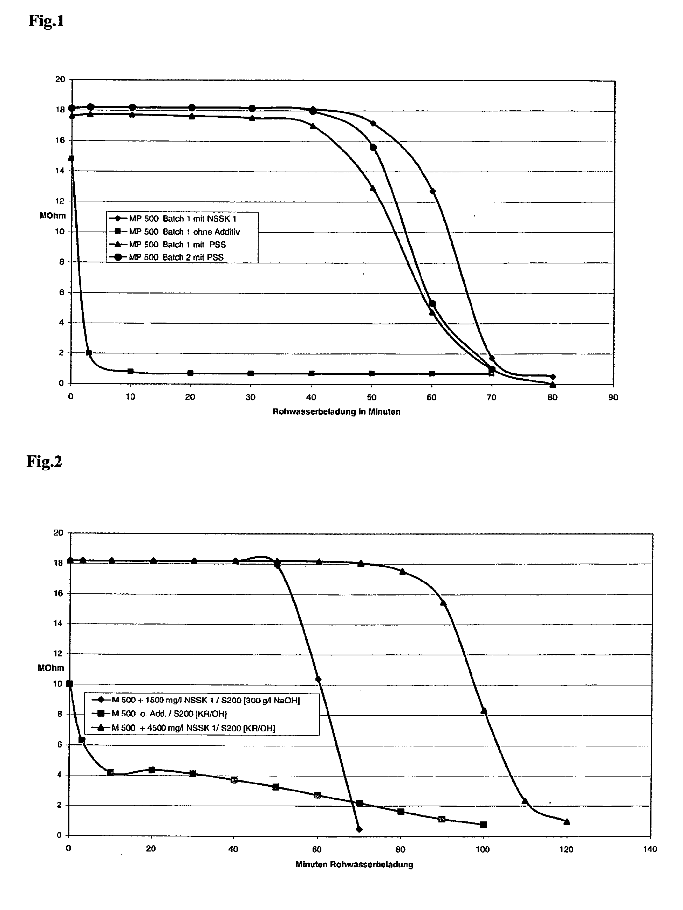

Die Beladung des Anionenaustauschers ist dabei ohne jede negative Auswirkung auf die Leistungsfähigkeit des entsprechend hergestellten Mischbettes. Vielmehr scheint in Teilaspekten die Leistungsfähigkeit sogar noch verbessert (Fig. 1.), und die auch im Vergleich zu einer analog US-A 5 902 833 hergestellte Probe (Beispiel 3).

Neben der wichtigen Eigenschaft der Separierbarkeit hat die Verhinderung der Agglomeration erheblichen Einfluss auf Performance der Harzmischung hinsichtlich der Auswaschbarkeit und der Austauschkinetik. Verklumpung, selbst im Mikrobereich führt zur Kanalbildung bei der Durchströmung, d. h einzelne Bereiche der Harzschüttung, die in der Regel von oben nach unten durchströmt wird, werden nicht benetzt und nehmen somit nicht am Austausch teil.

Schwerwiegender als die Kanalbildung ist der Materialübertrag, der durch mechanisches Aufbrechen, wie durch Luftwirbel oder Rühren der Verklumpung entsteht. Da die Anionenaustauscherkomponente die weichere Oberfläche hat, wird in der Regel Anionenaustauschermaterial auf den Kationenaustauscher übertragen. Je länger und stärker die mechanische Belastung einwirkt, umso mehr Material wird übertragen. Da die funktionelle Gruppe des Anionenaustauschers ein Kation ist, wird die Oberfläche des Kationenharzes durch den Materialübertrag mit Kationen beladen. Dies führt zu einem schlechteren Stoffaustausch durch diese Deckschicht, was sich wiederum negativ auf den Schlupf auswirkt. Je stärker die Deckschicht ausgebildet ist, umso höher ist der Kationenschlupf und umso niedriger ist der Widerstand der Lösung im Ablauf nach der Harzmischung. Dem kann nur entgegengewirkt werden, in dem die Verklumpung durch eine geeignete Beschichtung deutlich reduziert oder sogar komplett unterdrückt wird.

### Erläuterungen zu den Fig. 1 bis Fig. 3:

Die Performance einer Harzmischung wird durch folgende messbare Größen definiert:
Widerstand des aufbereiteten Wasser bei Auswaschen
Widerstand des aufbereiteten Wasser bei Beladung
SiO₂-Schlupf bei Beladung
Nutzbare Kapazität

Die ,nutzbare Kapazität', ausgedrückt in eq/l, ist ein Maß für die effektiv zur Verfügung stehende Ionenaustauschkapazität bis zum Durchbruch bei einem definierten Endpunkt, wie z.B einem minimalen Restwiderstand von 17 MΩ. Hierzu wird die Ionenbelastung des Beladungswassers in eq/l multipliziert mit Durchflussmenge in 1/h und der Zeit bis zum Durchbruchpunkt in h. Dies ergibt die Ionenbelastung, welche durch die Harzmenge in Liter dividiert wird.

Fig. 1 Darstellung der Versuchsergebnisse von unterschiedlich behandelten Harzproben inklusive der Nullprobe (Beispiel 3 und Messung nach Beispiel 4; NSSK=Naphthalinsulfonsäurekondensat, PSS=Polystyrolsulfonsäure).

Bei identischen Parametern hinsichtlich Durchflussmenge und Ionenbelastung des Rohwassers, wie bei den Versuchen in Fig. 1, kann die Zeit bis zum Durchbruch als ausreichender Vergleichsmaßstab herangezogen werden (Versuchsdurchführung Beispiel 4).

Fig.1 zeigt die Ergebnisse einer Testreihe mit LEWATIT^{®} MonoPlus MP500, das nach der Behandlung mit NSSK bzw. PSS mit 300 g NaOH 100% / 1 regeneriert wurde. Danach wurde es mit einer unbehandelten Kationenkomponente vom Typ LEWATIT^{®} MonoPlus SP112 H im Verhältnis Kationen zu Anionen 1:1,5 gemischt. Der Kationenaustauscher wurde zur besseren Vergleichbarkeit in der regenerierten Form vorgelegt. Zur besseren Vergleichbarkeit wurden Harzproben desselben Produktionsbatches verwendet.

In Fig. 1 erkennt man die um Größenordnungen höhere Kapazität der mit Polyanionen belegten Anionenaustauscherkomponenten hergestellten Mischbetten im Vergleich zur Nullprobe (magenta). Die mit NSSK behandelte Probe hat eine höhere Kapazität als die mit PSS behandelte.

Die unbehandelte Probe ließ sich nicht auf Werte größer 17 MΩ auswaschen (Startpunkt der Kurve bei 0 min). Die mit NSSK 1 behandelte Probe ließ sich auf den theoretischen Widerstand von reinem Wasser 18,3 MΩ auswaschen. Die mit PSS behandelten Proben erreichten ebenfalls ein akzeptables Niveau.

Bei Beladung erreichte wiederum die mit NSSK 1 behandelte Probe die beste Performance, ersichtlich an der längsten Zeit bis zum Durchbruchspunkt von 17 MΩ.

Die unbehandelte Probe war kinetisch zu schlecht, um den Salzgehalt im ausreichenden Maße zu reduzieren.

Ein ähnliches Bild ergibt sich bei der Untersuchung von gelförmigen Austauschermischbetten (Fig. 2). Die unbehandelte Probe ist im Mischbett zu schlecht, um den Salzgehalt ausreichend senken zu können. Die behandelten Proben erreichen die geforderten Widerstandswerte. Die unterschiedlichen nutzbaren Kapazitäten ergeben sich aus unterschiedlich effektiven Regenerierungsverfahren (Beispiel 4).

Fig. 2 Darstellung der Versuchsergebnisse von unterschiedlich behandelten Harzproben derselben Partie LEWATIT^{®} MonoPlus M 500 im Mischbett mit LEWATIT^{®} MonoPlus S 200 KR. Beladungsmengen NSSK 1 und Art der Regenerierung sind der Legende zu entnehmen. [Messungen nach Beispiel 4; NSSK= Naphthalinsulfonsäurekondensat].

Bei der Minimierung der Einsatzmengen der zur Beschichtung ausgewählten erfindungsgemäßen Verbindungen kann durch Zusatz von Salz das Aufziehverhalten verbessert und so auch mit sehr geringen Zusatzmengen eine gute Entsalzungsleistung im Mischbett erzielt werden.

Die Wirkung von Calciumchloridzusatz bei der Beaufschlagung von LEWATIT^{®} MonoPlus M 800 mit Naphthalinsulfonsäurekondensat 2 ist eindrucksvoll in Fig. 3 zu erkennen: Trotz gleich niedrigem Einsatz von NSSK 2 ist die Entsalzungsleistung der in Gegenwart von Calciumchlorid hergestellten Probe deutlich besser als bei der "Nullprobe". Ein negativer Einfluss des verwendeten Erdalkalisalzes war zu keinem Zeitpunkt feststellbar.

Fazit: Polyanionzusätze zu Anionenaustauscherkomponenten in Mischbetten sind in der Lage das sogenannte Clumping effektiv zu reduzieren bzw. vollständig zu unterbinden mit dem Effekt, dass entsprechend behandelte Mischungen schneller das geforderte Widerstandsniveau im Eluat erreichen (bzw. nur solche Mischungen dieses Niveau überhaupt erreichen) und eine höhere nutzbare Kapazität aufweisen als entsprechende Mischungen ohne Additivzusatz. In Versuchen zeigten NSSK-behandelte Mischungen bessere Messwerte als PSS-behandelte Vergleiche.

Der ausschließliche Zusatz der beanspruchten Verbindungen zur Anionenaustauscherkomponente in Mischbetten ermöglicht die effektive Trennung im Aufstromverfahren zur Regeneration der Komponente.

Fig 3 ist eine Darstellung der Versuchsergebnisse von gleichartig mit Naphthalinsulfonsäurekondensat 2 behandelten Harzproben derselben Partie LEWATIT^{®} MonoPlus M 800 mit und ohne Gegenwart von Calciumchlorid (Beispiel 5) im Mischbett mit LEWATIT^{®} MonoPlus S 200 KR. Die Messung erfolgte in Abweichung zur Beschreibung in Beispiel 4 nicht mit "Rohwasser" sondern mit Kochsalzlösung (500 ppm).

## Patentansprüche

1. Verfahren zur Herstellung von nicht agglomerierenden, gut separierbaren Ionenaustauschermischbetten oder von Mischbettkomponenten **dadurch gekennzeichnet, dass** die Anionenaustauscherkomponente vor oder nach der Mischung mit der Kationenaustauscherkomponente mit einem Kondensat einer oder mehrerer aromatischer Sulfonsäuren in den Anwendungskonzentrationen von 10 mg/Liter Harz bis 100 g/Liter Harz behandelt wird und dass zur Herstellung des Kondensats als Sulfonsäuren Naphthalinsulfonsäuren eingesetzt werden und diese mit Aldehyden oder Ketonen kondensiert werden.

2. Verfahren gemäß Anspruch 1, **dadurch gekennzeichnet, dass** zur Herstellung von Mischbetten die Behandlung des Anionenaustauschers vor der Regeneration des Anionenaustauschers und vor der Mischung mit der Kationenaustauscherkomponente erfolgt.

3. Verfahren gemäß der Ansprüche 1 bis 2, **dadurch gekennzeichnet, dass** die Sulfonsäurekondensate ein Molgewicht von > 1.000 g/mol aufweisen.

4. Verfahren gemäß der Ansprüche 1 bis 3, **dadurch gekennzeichnet, dass** bei der Behandlung der Anionenaustauscherkomponente Salz zugesetzt wird.

5. Verfahren gemäß Anspruch 4, **dadurch gekennzeichnet, dass** es sich bei dem zugesetzten Salz um Erdalkalisalze handelt.

## Claims

1. Process for producing non-agglomerating readily separable mixed bed ion exchangers or mixed bed components, **characterized in that** the anion exchange component, before or after mixing with the cation exchange component, is treated with a condensate of one or more aromatic sulphonic acids in the application concentrations of 10 mg/litre of resin to 100 g/litre of resin and **in that**, for producing the condensate, as sulphonic acids, use is made of naphthalenesulphonic acids and said naphthalenesulphonic acids are condensed with aldehydes or ketones.

2. Process according to Claim 1, **characterized in that**, for producing mixed beds, the anion exchanger is treated before regeneration of the anion exchanger and before mixing with the cation exchange component.

3. Process according to Claims 1 and 2, **characterized in that** the sulphonic acid condensates have a molar weight of > 1000 g/mol.

4. Process according to Claims 1 to 3, **characterized in that** salt is added in the treatment of the anion exchange component.

5. Process according to Claim 4, **characterized in that** the salt added is an alkaline earth metal salt.

## Revendications

1. Procédé de fabrication de lits mixtes échangeurs d'ions non agglomérants et bien séparables ou de composants de lits mixtes, **caractérisé en ce que** le composant échangeur d'anions est traité avec un condensat d'un ou de plusieurs acides sulfoniques aromatiques en des concentrations d'application de 10 mg/litre de résine à 100 g/litre de résine avant ou après le mélange avec le composant échangeur de cations, et **en ce que** des acides naphtaline-sulfoniques sont utilisés en tant qu'acides sulfoniques pour la fabrication du condensat et ceux-ci sont condensés avec des aldéhydes ou des cétones.

2. Procédé selon la revendication 1, **caractérisé en ce que** le traitement de l'échangeur d'anions pour la fabrication de lits mixtes a lieu avant la régénération de l'échangeur d'anions et avant le mélange avec le composant échangeur de cations.

3. Procédé selon les revendications 1 à 2, **caractérisé en ce que** les condensats d'acide sulfonique présentent un poids moléculaire > 1 000 g/mol.

4. Procédé selon les revendications 1 à 3, **caractérisé en ce qu'**un sel est ajouté lors du traitement du composant échangeur d'anions.

5. Procédé selon la revendication 4, **caractérisé en ce que** le sel ajouté consiste en des sels de métaux alcalins.
